# EUROPÄISCHE PATENTANMELDUNG

(11) **EP 2 048 021 A1**
(43) Veröffentlichungstag der Anmeldung: **15.04.2009**
(21) Anmeldenummer: 08014935.4
(22) Anmeldetag: 22.08.2008
(51) Int. Cl.: B60M 1/28

(54) **Verfahren zur automatischen Erfassung von kritischen Bereichen eines Fahrdrahtes der Oberleitung von schienengebundenen Fahrzeugen**

(30) Priorität: 09.10.2007 DE 102007048485
(71) Anmelder: DB Netz AG, 60468 Frankfurt am Main (DE)
(72) Erfinder: Pohl, Peter, 58239 Schwerte (DE)
(74) Vertreter: Zinken-Sommer, Rainer

(57) **Zusammenfassung**

Die Erfindung beschreibt ein Verfahren zur automatischen Erfassung von kritischen Bereichen eines Fahrdrahtes der Oberleitung von schienengebundenen Fahrzeugen, wobei die Oberleitung unter Betriebsspannung erfasst wird und die Messung unterbrechungsfrei durchgeführt wird.

Der Erfindung liegt die Aufgabe zugrunde, die Nachteile des Standes der Technik durch ein Verfahren zu beheben, welches eine lückenlose, automatische und ortsbezogene Aufnahme von kritischen Bereichen eines Fahrdrahtes gewährleistet.

Dies wird erfindungsgemäß dadurch erreicht, dass der Stromabnehmer mit optischen und/oder elektromechanischen und/oder induktiven Sensoren bestückt wird, wobei die Sensoren an den Stellen der Schleiffläche oder dem Notlauf des Stromabnehmers angeordnet sind, die als kritisch und damit zu prüfen bestimmt sind. Sie sind über elektrische oder Glasfaserleitungen mit einem oder mehreren Rechnern, im Weiteren als Rechnereinheit bezeichnet, verbunden. Durch das Aufsetzen des ein- und auslaufenden oder kreuzenden Fahrdrahtes werden die optischen und/oder mechanischen und/oder induktiven Sensoren angeregt. In dem Augenblick, in dem einer der Sensoren angeregt wird, geht ein Signal an die Rechnereinheit, wobei am Stromabnehmer (2) im Bereich des Oberleitungspotentiales ein Signalwandler befestigt wird, dessen Signal in den im Messfahrzeug befindlichen Rechner übertragen wird.

## Beschreibung

Die Erfindung beschreibt ein Verfahren zur automatischen Erfassung von kritischen Bereichen eines Fahrdrahtes der Oberleitung von schienengebundenen Fahrzeugen, wobei die Oberleitung unter Betriebsspannung erfasst wird und die Messung unterbrechungsfrei durchgeführt wird.

Entsprechend des geltenden Regelwerkes für Eisenbahnverkehrsunternehmen in Deutschland, ist die Oberleitung der freien Strecke und der durchgehenden Hauptgleise wiederkehrenden Funktionsprüfungen zu unterziehen, wobei das Zusammenwirken von Stromabnehmer und Oberleitungskettenwerk zu prüfen ist.
Bei der Funktionsprüfung ist die Lage der ein- und auslaufenden Fahrdrähte kreuzender Kettenwerke zu prüfen. Das geschieht, indem geprüft wird, ob der übernehmende Fahrdraht bei einer Kreuzung oder Nachspannung innerhalb vorgegebener Abstände aus der Mitte auf dem Stromabnehmer aufsetzen. Die Höhe wird durch den bisher führenden Fahrdraht vorgegeben und wird daher ständig verändert. Ebenfalls wird das Überschreiten des Zickzacks (je Bauart 300mm oder 400mm plus 30 mm Wanktoleranz) geprüft. Auch dabei ändert sich die Messhöhe ständig.
Um den betrieblichen Aufwand zu minimieren und die Prüfung während des normalen Betriebsablaufes durchzuführen, muss die Oberleitung dabei eingeschaltet bleiben können, d.h. das Messsystem steht während der Prüfung unter Oberleitungsspannung.
Derzeit werden die kritischen Stellen mit elektromechanisch arbeitenden Endschaltern erfasst. Beim Berühren eines solchen Endschalters kommt es zu einem akustischen Signal im Messfahrzeug, zudem leuchtet ein Melder auf. Daraufhin orientiert sich der Prüfer auf der freien Strecke an der Hektometertafel, in Bahnhofsbereichen bildet er einen Bezug zu markanten Punkten, wie Weichen oder Signalen; "vor Weiche x" oder "ca. x m vor oder hinter Signal Y". Das Ereignis und die ungenaue Ortsbeschreibung werden notiert und bilden den Prüfbefund.

Die Orientierung benötigt, nachdem plötzlich ein Sensor angesprochen hat, Zeit und ist bei Dunkelheit oftmals nicht mit der erforderlichen Genauigkeit möglich. Die Ortsangabe ist daher ungenau.
Nachdem der Ort ermittelt ist, werden die Signale quittiert und der Empfänger wieder empfangsbereit geschaltet. Erst nachdem die Meldung quittiert worden ist, ist das System wieder messbereit, zwischenzeitlich aufgetretene Fehler werden nicht registriert.
Nachteile dieser Verfahrensweise sind:
- Die Prüfung ist systembedingt lückenhaft.
- Die ungenaue Ortsangabe führt dazu, dass die Instandhaltung beschäftigten Bereiche bzw. Unternehmen lange suchen müssen und besonders bei betrieblich bedingten Nachteinsätzen die in den Betriebsanweisungen vereinbarten Arbeitszeiten allein für das Auffinden des Störungsortes gebraucht werden.
- Das geht zu Lasten der Arbeitszeit und bringt Qualitätseinbußen bei der Instandhaltung mit sich.

Bekannt ist ein Verfahren und eine Vorrichtung zur Kontrolle von Fahrdrähten bei Oberleitungs-Schienensystemen, wobei die Lage des Fahrdrahtes induktiv ermittelt und ein elektrisches Messsignal einer Auswertungselektronik zugeführt wird (DE 44 09 483 C1). Die Oberleitung wird dabei abschnittsweise mit einer Hochfrequenz beaufschlagt, wonach mittels einer parallel zur Oberleitung geführten, ein Magnetfeld induzierenden Antenne die Lage der Hochfrequenz und damit des Fahrdrahtes bestimmt wird. Im deutschen Streckennetz wäre eine derartige Beaufschlagung nur nutzbar, wenn einzelne Streckenabschnitte voneinander isoliert werden würden, was nicht möglich ist. Ein herkömmlicher Stromabnehmer kommt ebenfalls nicht zur Anwendung.

Aus der DE 201 10 564 U1 ist eine Anordnung zur seitlichen Positionsmessung eines Oberleitungsfahrdrahtes für Bahnen mittels optischer Lichtleiter-Reflexionsmessung bekannt. Der Stromabnehmer wird dabei mit 600 bis 2000 Lichtleitern, Kameras und Optiken bestückt, um über die optische Reflexion die Lateralposition des Fahrdrahtes zu erfassen. Die untern dem Fahrdraht befindlichen Empfangslichtleiter werden in ihrer Helligkeitsänderung durch eine Photosensoranordnung erfasst und ausgewertet. Der technische Aufwand dieser Messung ist sehr groß. Ein mit derart umfangreicher Technik bestückter Stromabnehmer wird nicht mehr mit dem vorgegebenen Anpressdruck arbeiten können. Des Weiteren wird keine Verortung der Messergebnisse und keine Verwendung einer optischen Erfassung von kritischen Bereichen des Fahrdrahtes per Video beschrieben.

Die DE 199 36 448 A1 beschreibt ein Bildaufnahme- und Auswertesystem zur Inspektion von Fahrleitungen, wobei vorzugsweise das Kettenwerk inspiziert wird. Das System verwendet eine Beleuchtungseinheit, eine Kamera als Bildaufnahmegerät zur jeweiligen Bildpunkterfassung am Längskettenwerk, mindestens eine Rechnereinheit zur Auswertung von Defekten und einen Schwingspiegel zur Sicherstellung der Beleuchtung und Erfassung der gesamten Seitenfläche einer aufzunehmenden Quertrageinrichtung. Es erfolgt eine senkrechte Betrachtung nach oben. Die Verwendung eines Stromabnehmers zur Anbringung der Messtechnik ist ausgeschlossen, da dieser den Messpunkt verdecken würde. Ohne Stromabnehmer kann aber ein Aufsetzen des Fahrdrahtes nicht erfasst und nicht vermessen werden.

In der DE 202 13 180 U1 wird eine Messeinrichtung zur Bestimmung der Seitenlage einer Fahrleitung für elektrisch betriebene Schienenfahrzeuge durch punktuelles Erfassen der Position des Fahrdrahtes mittels optischer Schalter beschrieben, wobei ein nachgeschaltetes Steuergerät zur Intensivauswertung der über einen Lichttaster empfangenen Lichtimpulse angeordnet ist, welches ein elektrisches Signal an eine Bedien- und Anzeigeeinheit weiterleitet, die mit einem fahrzeugbasierten und/oder absoluten Wegmesssystem gekoppelt ist.
Da das Steuergerät im Fahrzeug angebracht ist und mit Weginformationen versorgt wird, muss eine 15 kV-Verbindung zum Erdpotential bestehen. Die Signalübertragung vom Stromabnehmer zum Steuergerät nicht beschrieben wird, muss davon ausgegangen werden, dass das System nur bei ausgeschalteter und bahngeerdeter Oberleitung genutzt werden kann. Auch bei Anordnung das Gerät am Stromabnehmer auf 15 kV-Potential angebracht werden würde, würde die Verbindung mit dem Wegmesssystem ein Einsatz bei eingeschalteter Oberleitung unmöglich machen, da der geerdete Wegmesser mit dem System verbunden werden muss. Aufgrund seiner speziellen Anordnung am Scheitelrohr und des speziellen Winkels von Lichtsender zu Lichtempfänger von < 5°, sowie des Hinweises, dass die Messvorrichtung vertikale Abstandsschwankungen toleriert, ist klar, dass der Sensor bereits anspricht, wenn der Fahrdraht noch nicht die Schleifleiste berührt, was zwangsläufig zu Fehlalarmen führen muss.

Aus der EP 1 520 747 B1 ist ein Verfahren zur berührungslosen Messung von Winkeln und/oder Abständen zwischen Strukturen eines Objektes bekannt. Das Verfahren wird zur Winkel- und Abstandsmessung an Stützpunkten verwendet. Die zu erfassenden kritischen Punkte liegen allerdings nie an Stützpunkten, sondern immer innerhalb einer Feldlänge (zwischen zwei Stützpunkten) im Bereich von Nachspannungen (Übergang von einem Fahrdrahtteilstück zum Nächsten), in Gleisbögen (dem sogenannten c-Maß) oder über Weichen (Kreuzungen). Zudem ist die Kamera alleine nicht geeignet zu erfassen wann exakt der Fahrdraht aufsetzt.

Die DE 197 37 513 C2 beschreibt eine Bildaufnahme-Anordnung mit photogrammetrischer Vermessung von gleisgestützten Transportsystemen als transportabler und tragbarer Referenzrahmen, wobei Lichtraumprofile bezüglich der Ist-Gleislage vermessen werden. Das Lichtraumprofil stellt ein festes Maß dar. Das Messgerät wird dabei von einer Engstelle zur nächsten versetzt, um aus einem Einzelfoto Profileinschränkungen zu ermitteln. Die beschriebene Bildaufnahme-Anordnung kann nicht dazu eingesetzt werden, ein Streckennetz mit eigenem Antrieb und hoher Geschwindigkeit zu befahren, um Engstellen zu ermitteln. Bei dem Referenzrahmen handelt es sich um ein festes Bauteil ohne in der Höhe veränderbaren Stromabnehmer oder eine in der Höhe variable Oberleiste mit Stromabnehmerprofil.

Der Erfindung liegt die Aufgabe zugrunde, die Nachteile des Standes der Technik durch ein Verfahren zu beheben, welches eine lückenlose, automatische und ortsbezogene Aufnahme von kritischen Bereichen eines Fahrdrahtes gewährleistet.
Dies wird erfindungsgemäß dadurch erreicht, dass der Stromabnehmer mit elektromagnetischen und/oder optischen und/oder induktiven Sensoren bestückt wird, wobei die Sensoren an den Stellen der Schleiffläche oder dem Notlauf des Stromabnehmers angeordnet sind, die als kritisch und damit zu prüfen bestimmt sind. Die sich ständig verändernde Messhöhe wird durch den Stromabnehmer erreicht und sicher eingehalten. Sie sind über elektrische oder Glasfaserleitungen mit einem oder mehreren Rechnern, im Weiteren als Rechnereinheit bezeichnet, verbunden. Durch das Aufsetzen des ein- und auslaufenden oder kreuzenden Fahrdrahtes werden die optischen und/oder mechanischen und/oder induktiven Sensoren angeregt. In dem Augenblick, in dem einer der Sensoren angeregt wird, geht ein Signal an die Rechnereinheit, wobei am Stromabnehmer (2) im Bereich des Oberleitungspotentiales ein Signalwandler befestigt wird, dessen Signal in den im Messfahrzeug befindlichen Rechner übertragen wird.

In der Rechnereinheit wird das Signal mit der Ortsinformation verbunden. Diese Ortangabe wird mit einem Wegaufzeichnungsgerät am Messfahrzeug erzeugt. Gleichzeitig kann auch über dGPS die zugehörige Koordinate ermittelt und ebenfalls aufgezeichnet werden. Die synchron erzeugten Videosignale vom Stromabnehmer und oder vom Fahrweg werden ebenfalls getriggert und dem Ereignis zugeordnet.
Beim Einsatz von Sensoren auf dem Oberleitungspotenzial von 15 kV muss das elektrische Signal in ein optisches Signal gewandelt werden. Da Glasfaser eine hochohmige Verbindung bildet, kann die Oberleitung im eingeschalteten Zustand geprüft werden. Die Rechnereinheit kann dabei im Messfahrzeug untergebracht sein.

Die Erfindung wird nachfolgend anhand eines Ausführungsbeispieles näher erläutert.
Dabei zeigen:

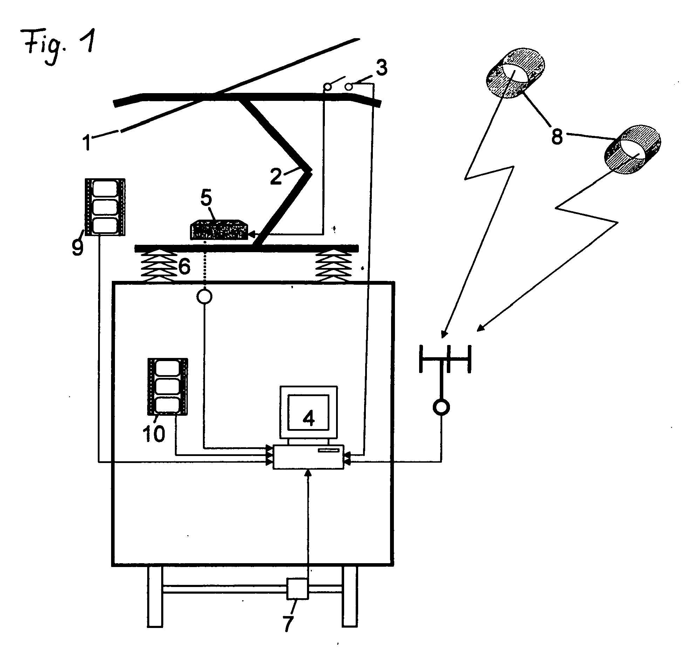

- Figur 1 - eine schematische Darstellung des Messsystems

Das Messsystem zum Erfassen kritischer Stellen im Fahrdraht wird auf einem Prüffahrzeug installiert. Es ist über den Stromabnehmer 2 mit dem Fahrdraht 1 der Oberleitung verbunden. Am Stromabnehmer 2 sind Sensoren 3 zur Erfassung kritischer Stellen (Videokamera) angeordnet, die einerseits mit der im Fahrzeug befindlichen Rechnereinheit 4 und andererseits mit der am Stromabnehmer befindlichen Rechnereinheit 5 verbunden sind Der Rechnereinheit 4 werden die von den Sensoren erzeugten Signale zugeführt. Der Rechner kodiert das jeweilige Signal nach der Anordnung (Seitenlage in Abstand von Mitte und rechts/links) des erzeugenden Sensors, generiert das Signal in ein optisches und sendet es an die Rechnereinheit 5.
Der Rechner 5 ist über einen Optokoppler oder eine Glasfaserleitung 6 mit der Rechnereinheit 4 verbunden. An der Rechnereinheit 4 sind weiterhin das Aufzeichnungsgerät 9 für die Videoaufzeichnung des Laufes des Stromabnehmers 2, das Aufzeichnungsgerät 10 für die Aufzeichnung des Videos von der Strecke, der Empfänger 8 für das GPS-Signal und der am Radsatz/Achse befestigte Weggeber 7 angekoppelt.

Die Verfahrensweise bei der Messung ist folgende:
Ein Schienenfahrzeug befährt das Gleis mit einem Regelstromabnehmer mit einer vorgeschriebenen Anpresskraft. Der Stromabnehmer passt sich dabei in der Höhe ständig dem Fahrdraht an. Im Bereich der Schleifleiste sind Sensoren angebracht, mit denen das Aufsetzen von ein- und auslaufenden oder kreuzenden Fahrdrähten außerhalb definierter Grenzmaße erfasst werden. Der Lauf des Stromabnehmers am Fahrdraht wird mit Video aufgenommen. Ebenfalls läuft gleichzeitig ein Videosystem, dass die Strecke aus der Sicht des Triebfahrzeugführers aufnimmt. Der Fahrweg wird mit einem Odometer aufgezeichnet. Die Position des Schienenfahrzeuges kann gleichzeitig mit dGPS aufgezeichnet werden. Wenn ein Fahrdraht außerhalb des definierten Grenzmaßes auf dem Stromabnehmer aufsetzt, wird der dazugehörige Sensor ausgelöst. Dadurch wird eine am Stromabnehmer angebrachte Lichtquelle kurzfristig eingeschaltet. Der Sensor triggert ebenfalls das Videobild vom Stromabnehmer und der Strecke. Die Bildinformationen beider Videosysteme, ergänzt um den vom Odometer erzeugten Streckenkilometer (Ort des Ereignisses) und den vom dGPS erzeugten Koordinaten erzeugt das System eine präzise verortete Prüfinformation. Da das Aufleuchten der Lichtquelle im Video erkennbar ist, der Befund ebenfalls verifiziert.

Der Erfindung liegen folgende Vorteile zugrunde:
- die Oberleitung kann im eingeschalteten Zustand geprüft werden
- es ist eine genaue Ortsangabe zu einem kritischen Befund möglich, ohne ständige Beobachtung durch Mitarbeiter vor Ort
- die Prüfung wird nicht unterbrochen
- zu jedem Befund können ortsgenaue Videobilder vom Zusammenwirken Fahrleitung-Stromabnehmer bereitgestellt werden
- die im Auftrag fixierte Arbeitszeit zur Wiederherstellung des regelgerechten Zustandes kann im vollen Umfange für Instandhaltung genutzt werden, ohne eine langwierige Suche nach dem konkreten Ort der schadhaften Stelle durchführen zu müssen
- das Signal kann als Telegramm mit Ereignis, Strecke und Kilometer und/oder Koordinaten direkt und ohne Bearbeitung an eine Instandhaltungsstelle oder Leitwarte übermittelt werden
- da die Prüfbefunde exakt einem Ort zugeordnet sind, lassen sich Trends und Tendenzen des Zustandes ableiten
- durch die genaue Ortsangabe ist ein Vergleich des Zustandes vor und nach der Instandhaltungsmaßnahme möglich. Auf dieser Basis kann die Qualität und ebenfalls die Nachhaltigkeit einer IH-Maßnahme ermittelt werden.
- durch die genaue Ortsangabe ist ein Abgleich mit anderen Prüfungen des Fahrweges möglich, wie Fahrdrahtverschleiß und Gleisgeometrie.

## Patentansprüche

1. Verfahren zur automatischen Erfassung von kritischen Bereichen eines Fahrdrahtes der Oberleitung von schienengebundenen Fahrzeugen, wobei die Oberleitung unter Betriebsspannung erfasst wird,
**gekennzeichnet dadurch, dass** an einem Stromabnehmer (2) eines Messfahrzeuges im Bereich der Schleifflächen und/oder des Notlaufes elektromechanische und/oder optische und/oder induktive Sensoren (3) angebracht werden, die die Berührung des Stromabnehmers (2) mit dem Fahrdraht (1) über elektrische oder Glasfaserleitungen (6) an einen oder mehrere Rechner (4; 5) leiten, wobei die beim Aufsetzen des ein- und auslaufenden oder kreuzenden Fahrdrahtes (1) aufgenommenen Daten mit einer aus einem Wegaufzeichnungsgerät (7) generierten Ortsangabe sowie mit separat über eine Videokamera (9; 10) synchron gewonnenen Daten des Stromabnehmers (2) und/oder des Fahrweges verknüpft werden, wobei am Stromabnehmer (2) im Bereich des Oberleitungspotentiales ein Signalwandler befestigt wird, dessen Signal in den im Messfahrzeug befindlichen Rechner übertragen wird.

2. Verfahren nach Anspruch 1, **gekennzeichnet dadurch, dass** beim Einsatz von elektromechanischen Sensoren (3) das elektrische Signal in ein optisches Signal gewandelt wird.

3. Vorrichtung nach Anspruch 1 und 2, **gekennzeichnet dadurch, dass** die Messung ohne Unterbrechungen des elektrischen Zugbetriebes durchgeführt wird.

4. Vorrichtung nach Anspruch 1 bis 3, **gekennzeichnet dadurch, dass** auf dem Videodatenträger das Aufleuchten der optischen Melder/Sensoren aufgezeichnet wird.

5. Vorrichtung nach Anspruch 1 bis 4, **gekennzeichnet dadurch, dass** das Signal als Telegramm mit Ereignis, Strecke und Kilometer und/oder Koordinaten ohne weitere Bearbeitung an eine Instandhaltungsstelle und/ oder eine Leitwarte übertragen wird.

6. Vorrichtung nach Anspruch 1 bis 5, **gekennzeichnet dadurch, dass** die Aufzeichnung der optischen Signale bei Nacht oder in Tunneln mittels künstlicher Beleuchtung und/oder Infrarotlicht durchgeführt wird.

7. Vorrichtung nach Anspruch 1 bis 6, **gekennzeichnet dadurch, dass** die Signale in dichter Folge aufgezeichnet werden.
